# EUROPÄISCHE PATENTANMELDUNG

(11) **EP 1 464 934 A1**
(43) Veröffentlichungstag der Anmeldung: **06.10.2004**
(21) Anmeldenummer: 04000679.3
(22) Anmeldetag: 15.01.2004
(51) Int. Cl.: G01K 1/14

(54) **Vorrichtung zur Bestimmung der Temperatur eines strömenden Mediums in einer Rohr- oder Schlauchleitung**

(30) Priorität: 31.03.2003 DE 10314705
(71) Anmelder: HERAEUS SENSOR TECHNOLOGY GMBH, D-63450 HANAU (DE)
(72) Erfinder: Wienand, Karlheinz, Dr., 63741 Aschaffenburg (DE); Muziol, Matthias, 63533 Mainhausen (DE); Hacker, Gernot, 63654 Bündingen (DE)
(74) Vertreter: Kühn, Hans-Christian

(57) **Zusammenfassung**

Die Erfindung betrifft eine Vorrichtung zur Bestimmung der Temperatur eines strömenden Mediums in einer Rohr- oder Schlauchleitung, wobei die Vorrichtung ein Sensorelement aufweist, das aus einem keramischen Substrat und einem darauf angeordneten Dünnfilmwiderstand gebildet ist, wobei das Sensorelement mit mindestens zwei elektrischen Leitern elektrisch und mechanisch verbunden ist, wobei das Sensorelement in einem Kunststoffgehäuse angeordnet ist, das eine Öffnung mindestens für die Rohr- oder Schlauchleitung aufweist, wobei das Kunststoffgehäuse als Spritzgussteil ausgebildet ist und die elektrischen Leiter aus Metallstreifen gebildet sind, die jeweils ein erstes und ein zweites Ende aufweisen, wobei das Sensorelement an dem ersten Ende der Metallstreifen angeordnet ist, und wobei die Metallstreifen in einem Bereich zwischen ihrem ersten und zweiten Ende mit dem Kunststoffgehäuse umspritzt sind.

## Beschreibung

Die Erfindung betrifft eine Vorrichtung zur Bestimmung der Temperatur eines strömenden Mediums in einer Rohr- oder Schlauchleitung, wobei die Vorrichtung ein Sensorelement aufweist, das aus einem keramischen Substrat und einem darauf angeordneten Dünnfilmwiderstand gebildet ist, wobei das Sensorelement mit mindestens zwei elektrischen Leitern elektrisch und mechanisch verbunden ist, wobei das Sensorelement in einem Kunststoffgehäuse angeordnet ist, das eine Öffnung mindestens für die Rohr- oder Schlauchleitung aufweist. Die Erfindung betrifft weiterhin geeignete Verfahren zur Herstellung einer derartigen Vorrichtung.

Vorrichtungen der eingangs genannten Art sind aus der DE 100 29 186 C2 bekannt. Hier ist ein Temperatursensor offenbart, der auf Leiterbahnen direkt auf der Außenseite eines Rohres befestigt ist. Ein separates Gehäuse umschließt sowohl den Temperatursensor als auch das Rohr vollständig und wirkt gleichzeitig als Zugentlastung für ein Anschlusskabel des Temperatursensors.

Die DE 299 14 553 U1 offenbart einen Außentemperaturfühler in einem rohrförmigen Gehäuse, welches stumpf auf ein zu messendes Rohr aufgesetzt ist. Dabei ist die elektrische Einheit auf einem Keramiksubstrat im rohrförmigen Gehäuse integriert.

US 6,334,707 oder US 5,454,641 offenbaren einen Temperatursensor, der mittels einer C-förmigen Halteklammer an einem Rohr befestigt ist. Dabei sind die Kontaktoberflächen der Teile, welche den Temperatursensor enthalten, formschlüssig ans Rohr angepasst.

US 5,244,276 offenbart einen Temperatursensor in einem Gehäuse, welcher auf ein Rohr geklebt ist. Dabei umschließt das Gehäuse das Rohr nicht.

US 5,993,061 offenbart einen Temperaturfühler, der in eine Buchse gesteckt wird, welche auf der Oberfläche eines Rohres angeschweißt ist. Der Temperaturfühler wird dabei in seiner Position fixiert und gegen die Rohroberfläche gedrückt.

US 2002/0041621 A1 offenbart ein Gehäuse aus Kunststoff, das zur Aufnahme einer Rohrleitung bzw. eines Schlauches und eines Temperatursensors dient. Dabei weist das Gehäuse einen Deckel auf.

US 2002/0064206 A1 offenbart einen Temperaturfühler auf einer Rohroberfläche, welcher in einem Gehäuse angeordnet ist, das das Rohr umschließt. Dabei ist der Temperaturfühler im Gehäuse von wärmeisolierendem Material umgeben.

Das Gebrauchsmuster DE 83 10 279.5 offenbart einen Temperaturfühler, der mit einer Rohrschelle an einem Rohr befestigt ist, wobei die Fixierung mittels Federkraft über ein Wärmeleitstück erfolgt.

DE 33 16 995 A1 offenbart einen Temperaturfühler, der als Eintauchsensor direkt in den Rohrquerschnitt eines Rohres eingreift. Dabei ist ein Spritzgussteil um den Temperatursensor vorgesehen. Weiterhin ist ein Anschluss des Temperatursensors über einen Stecker offenbart.

Es ist nun Aufgabe der Erfindung, eine weitere Vorrichtung zur Temperaturmessung von in Schlauch- oder Rohrleitungen strömenden Medien bereitzustellen, die besonders einfach und kostengünstig hergestellt sowie installiert werden kann. Weiterhin stellt sich die Aufgabe, ein geeignetes Verfahren zur Herstellung einer solchen Vorrichtung bereitzustellen.

Die Aufgabe wird für die Vorrichtung dadurch gelöst, dass das Kunststoffgehäuse als Spritzgussteil ausgebildet ist und dass die elektrischen Leiter aus Metallstreifen gebildet sind, die jeweils ein erstes und ein zweites Ende aufweisen, wobei das Sensorelement an dem ersten Ende der Metallstreifen angeordnet ist, und wobei die Metallstreifen in einem Bereich zwischen ihrem ersten und zweiten Ende mit dem Kunststoffgehäuse umspritzt sind.

Vorteilhaft ist für eine solche Vorrichtung, dass die Anzahl der benötigten Bauteile äußerst gering ist und dass die Herstellung automatisiert werden kann. Als Material für den Dünnfilmwiderstand wird bevorzugt Platin oder eine Platin-Legierung eingesetzt. Als Material für die Metallstreifen hat sich Konstantan wegen seiner relativ geringen Wärmeableitung bewährt.

Eine derartige Vorrichtung wird vorzugsweise zur Messung von Temperaturen im Bereich von -40°C bis +180°C verwendet und beispielsweise als kostengünstiger Kraftstofftemperatursensor in Kraftfahrzeugen eingesetzt.

Insbesondere hat es sich bewährt, wenn ein Rohr- oder Schlauchleitungsabschnitt zum Einbau in die Rohr- oder Schlauchleitung sowie das Sensorelement in der Öffnung angeordnet sind, wobei das Sensorelement und der Rohr- oder Schlauchleitungsabschnitt über eine wärmeleitfähige Masse miteinander verbunden sind. Für die wärmeleitfähige Masse hat sich der Einsatz von Wärmeleitpaste, Wärmeleitfolie oder hochwärmeleitfähigem Silikonkautschuk bewährt.

Weiterhin hat es sich bewährt, wenn der Rohr- oder Schlauchleitungsabschnitt in mindestens einem Bereich seines Außendurchmessers mit dem Kunststoffgehäuse umspritzt ist. Dadurch wird zwischen dem Kunststoffgehäuse und dem Rohr- oder Schlauchleitungsabschnitt ein mechanisch fester Verbund ausgebildet, so dass weitere Maßnahmen zur Fixierungen des Rohr- oder Schlauchleitungsabschnitts entfallen können.

Im Hinblick auf eine möglichst geringe Anzahl von Bauteilen, die für die Vorrichtung Verwendung finden sollen, hat es sich bewährt, das Kunststoffgehäuse im Bereich des zweiten Endes der Metallstreifen als Stecker zur Verbindung der Metallstreifen mit einem elektrischen Anschlusskabel auszubilden.

Um den Messbereich vor mechanischer Einwirkung zu schützen, hat es sich bewährt, die Öffnung mit einem Deckel zu verschließen.

Die Aufgabe wird für das Verfahren zur Herstellung einer Vorrichtung, bei welcher ein Rohr- oder Schlauchleitungsabschnitt zum Einbau in die Rohr- oder Schlauchleitung sowie das Sensorelement in der Öffnung angeordnet sind und wobei das Sensorelement und der Rohr- oder Schlauchleitungsabschnitt über eine wärmeleitfähige Masse miteinander verbunden sind, dadurch gelöst, dass die Metallstreifen in dem Bereich zwischen ihrem ersten und zweiten Ende ein erstes Mal gebogen werden, dass die Metallstreifen dann in dem Bereich zwischen ihrem ersten und zweiten Ende sowie der Rohr- oder Schlauchleitungsabschnitt in mindestens einem Bereich seines Außendurchmessers mit dem Kunststoffgehäuse umspritzt werden, dass das erste Ende der Metallstreifen nun derart ein zweites Mal gebogen wird, dass das erste Ende nahe dem Rohr- oder Schlauchleitungsabschnitt platziert wird, und dass dann eine Menge an wärmeleitfähiger Masse in die Öffnung gegeben wird, so dass der Rohr- oder Schlauchleitungsabschnitt und das Sensorelement mittels der wärmeleitfähigen Masse miteinander verbunden werden.

Die Aufgabe wird für ein weiteres Verfahren zur Herstellung einer Vorrichtung, bei der ein Rohroder Schlauchleitungsabschnitt zum Einbau in die Rohr- oder Schlauchleitung sowie das Sensorelement in der Öffnung angeordnet sind und wobei das Sensorelement und der Rohr- oder Schlauchleitungsabschnitt über eine wärmeleitfähige Masse miteinander verbunden sind, dadurch gelöst, dass die Metallstreifen in dem Bereich zwischen ihrem ersten und zweiten Ende ein erstes Mal gebogen werden, dass die Metallstreifen dann in dem Bereich zwischen ihrem ersten und zweiten Ende mit dem Kunststoffgehäuse umspritzt werden, dass nun ein Rohroder Schlauchleitungsabschnitt in die Öffnung eingelegt wird, dass das erste Ende der Metallstreifen nun derart ein zweites Mal gebogen wird, dass das erste Ende nahe dem Rohr- oder Schlauchleitungsabschnitt platziert wird, und dass dann eine Menge an wärmeleitfähiger Masse in die Öffnung gegeben wird, so dass der Rohr- oder Schlauchleitungsabschnitt und das Sensorelement mittels der wärmeleitfähigen Masse miteinander verbunden werden.

Die Montage des Sensorelements kann dabei vor dem ersten Biegen der Metallstreifen erfolgen. Allerdings kann dies zu Beschädigungen der Verbindung zwischen den Metallstreifen und dem Sensorelement während des Biegevorganges führen. Daher ist eine Montage des Sensorelements erst nach dem zweiten Biegen der Metallstreifen zu bevorzugen. Die wärmeleitfähige Masse wird dabei vorzugsweise erst nach der Montage des Sensorelements in Form einer Wärmeleitpaste in die Öffnung gegeben.

Für die beiden Verfahren hat es sich insbesondere bewährt, wenn das erste Ende der Metallstreifen beim ersten Mal um +90° gebogen wird und dass das erste Ende der Metallstreifen beim zweiten Mal um -90° in den Ausgangszustand zurückgebogen wird.

Die Figuren 1 bis 2b sollen die erfindungsgemäße Vorrichtung beispielhaft erläutern. So zeigt
- Figur 1: eine erfindungsgemäße Vorrichtung im Längsschnitt
- Figur 1a: die Vorrichtung aus Figur 1 ohne Deckel in Draufsicht
- Figur 1b: die Vorrichtung aus Figur 1 von Seiten des Steckers gesehen
- Figur 1c: einen Teilabschnitt der Vorrichtung aus Figur 1 vor Montage des Sensorelements
- Figur 2: eine weitere erfindungsgemäße Vorrichtung im Längsschnitt
- Figur 2a: die Vorrichtung aus Figur 2 ohne Deckel von unten gesehen
- Figur 2b: die Vorrichtung aus Figur 2 von Seiten des Steckers gesehen

In den Figuren verwendete Bezugszeichen:
- 1: Vorrichtung zur Bestimmung der Temperatur eines strömenden Mediums
- 2: Rohr- oder Schlauchleitungsabschnitt
- 3: Sensorelement
- 4a, 4b: Metallstreifen
- 5: Kunststoffgehäuse
- 5a: Stecker
- 6: Öffnung
- 7: wärmeleitfähige Masse
- 8: Deckel
- 9a, 9b: Befestigungsschrauben
- 10: O-Ring

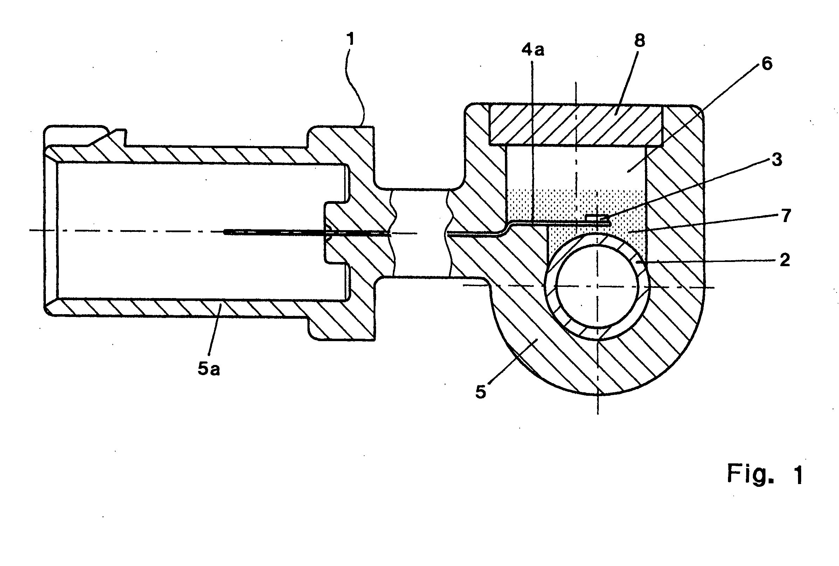

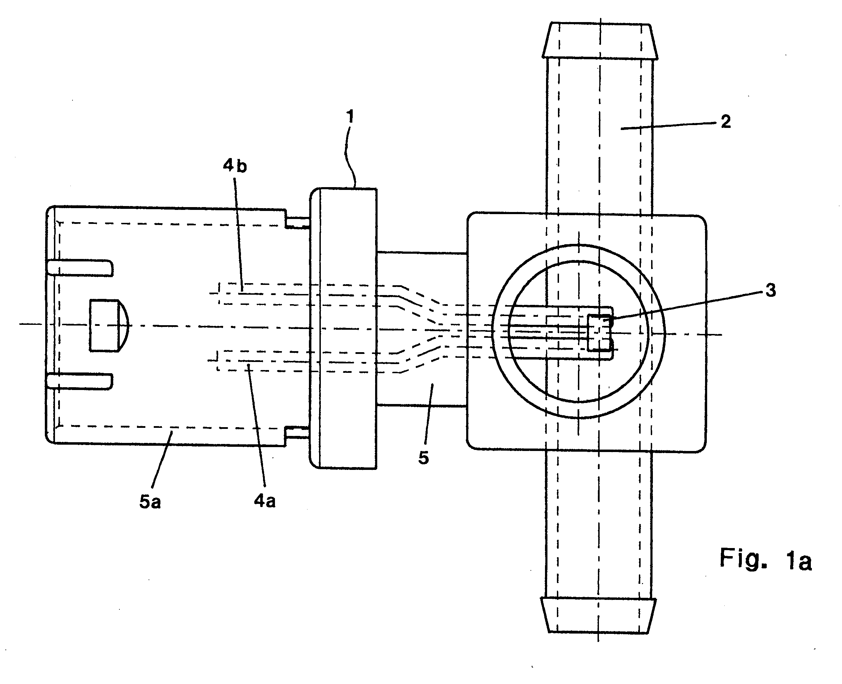

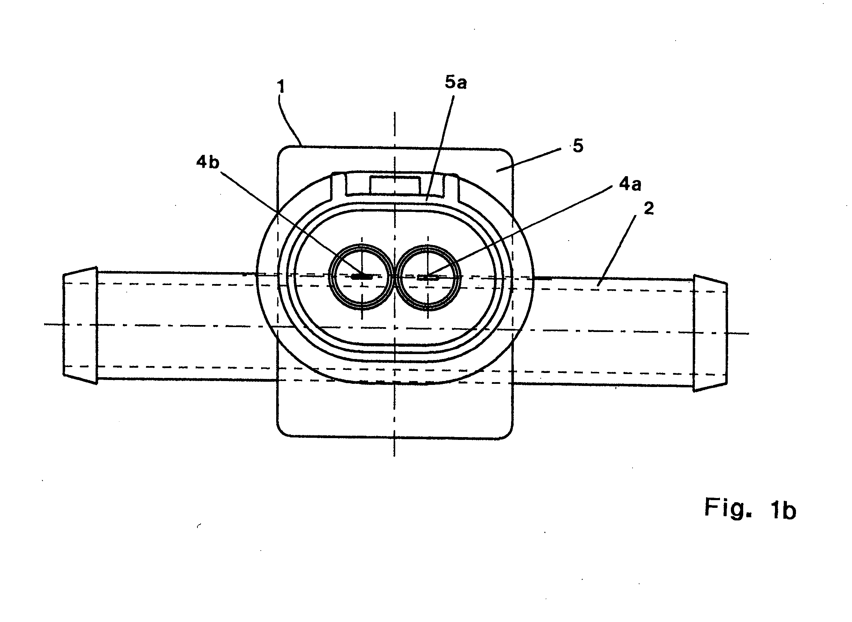

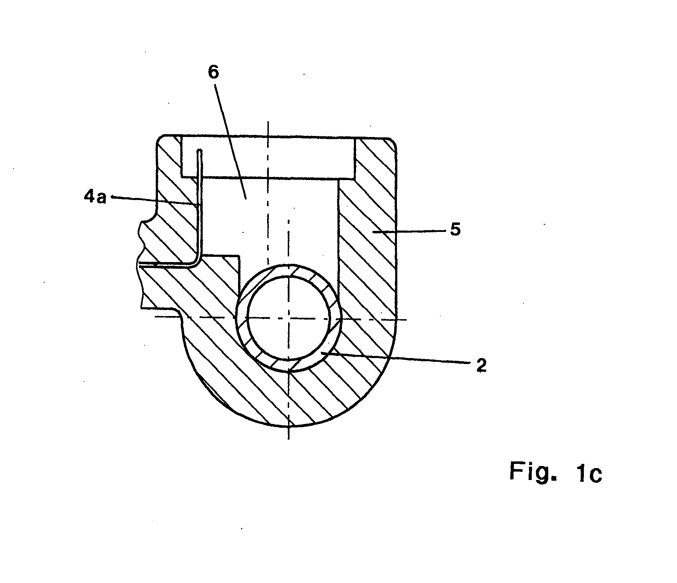

Figur 1 zeigt eine Vorrichtung 1 zur Bestimmung der Temperatur eines strömenden Mediums in einer Rohr- oder Schlauchleitung bzw. einem Rohr- oder Schlauchleitungsabschnitt 2 im Längsschnitt. Dabei ist ein Sensorelement 3 vorhanden, das aus einem keramischen Substrat und einem darauf angeordneten Platin-Dünnfilmwiderstand gebildet ist. Das Sensorelement 3 ist elektrisch und mechanisch mit zwei Metallstreifen 4a, 4b ( siehe Fig. 1a) verbunden, wobei das Sensorelement 3 die beiden Metallstreifen 4a, 4b an ihren einen Ende brückenartig überspannt. Die Metallstreifen 4a, 4b sind in einem Bereich zwischen ihren Enden in ein Kunststoffgehäuse 5 eingebettet, wobei das Kunststoffgehäuse 5 durch Umspritzen der Metallstreifen 4a, 4b gebildet ist und somit eine mechanisch feste Verbindung zwischen Kunststoffgehäuse 5 und Metallstreifen 4a, 4b ausgebildet ist. Das Kunststoffgehäuse 5 ist im Bereich der Enden der Metallstreifen 4a, 4b, welche dem Sensorelement 3 abgewandt sind, in Form eines Steckers 5a gestaltet, der einen unkomplizierten Anschluss eines hier nicht dargestellten elektrischen Anschlusskabels ermöglicht. Das Sensorelement 3 befindet sich in einer Öffnung 6 im Kunststoffgehäuse 5 in unmittelbarer Nähe zum zu messenden Rohr- oder Schlauchleitungsabschnitt 2. Dabei sind das Sensorelement 3 und der Rohr- oder Schlauchleitungsabschnitt 2 mittels einer wärmeleitfähigen Masse 7 miteinander verbunden. Ein Deckel 8 verschließt die Öffnung 6 und schützt das Sensorelement 3 vor mechanischer Beschädigung von außen.

Figur 1a zeigt die Vorrichtung 1 aus Figur 1 ohne Deckel 8 in Draufsicht.

Figur 1 b zeigt die Vorrichtung 1 aus Figur 1 von Seiten des Steckers 5a gesehen.

Figur 1 c zeigt einen Teilabschnitt der Vorrichtung 1 aus Figur 1 vor Montage des Sensorelements 3. Diese Darstellung soll ein erfindungsgemäßes Verfahren zur Herstellung der Vorrichtung 1 verdeutlichen. Die Metallstreifen 4a, 4b wurden dabei in dem Bereich zwischen ihrem ersten und zweiten Ende ein erstes Mal gebogen und in dem Bereich zwischen ihrem ersten und zweiten Ende mit dem Kunststoffgehäuse 5 umspritzt. Gleichzeitig wurde der Rohr- oder Schlauchleitungsabschnittes 2 mit dem Kunststoffgehäuses 5 umspritzt. Nach dem Umspritzen wird das erste Ende der Metallstreifen 4a, 4b in Richtung auf den Rohr- oder Schlauchleitungsabschnitt 2 zu ein zweites Mal gebogen und das Sensorelement 3 nahe dem Rohr- oder Schlauchleitungsabschnitt 2 auf den Metallstreifen 4a, 4b platziert. Eine Menge an wärmeleitfähiger Masse 7 wird in die Öffnung 6 gegeben, so dass der Rohr- oder Schlauchleitungsabschnitt 2 und das Sensorelement 3 mittels der wärmeleitfähigen Masse 7 verbunden werden.

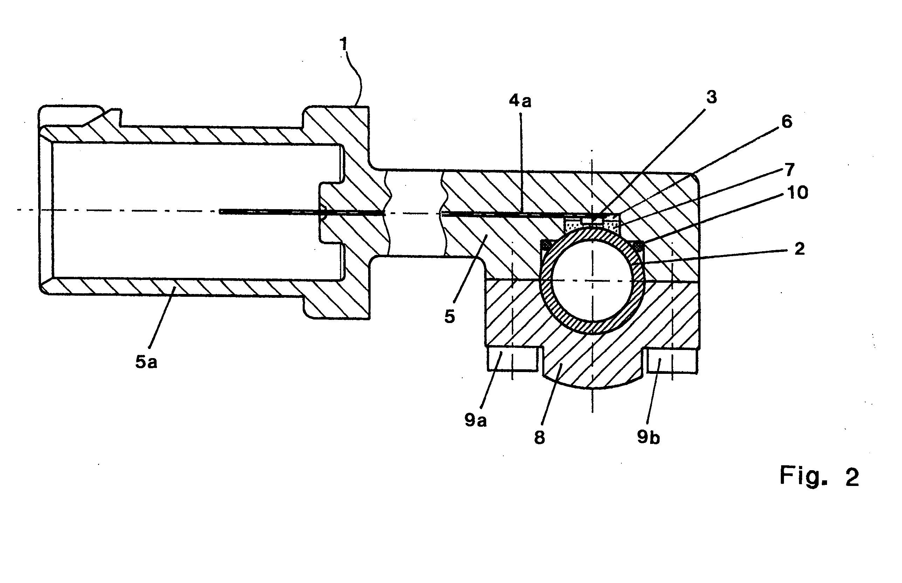

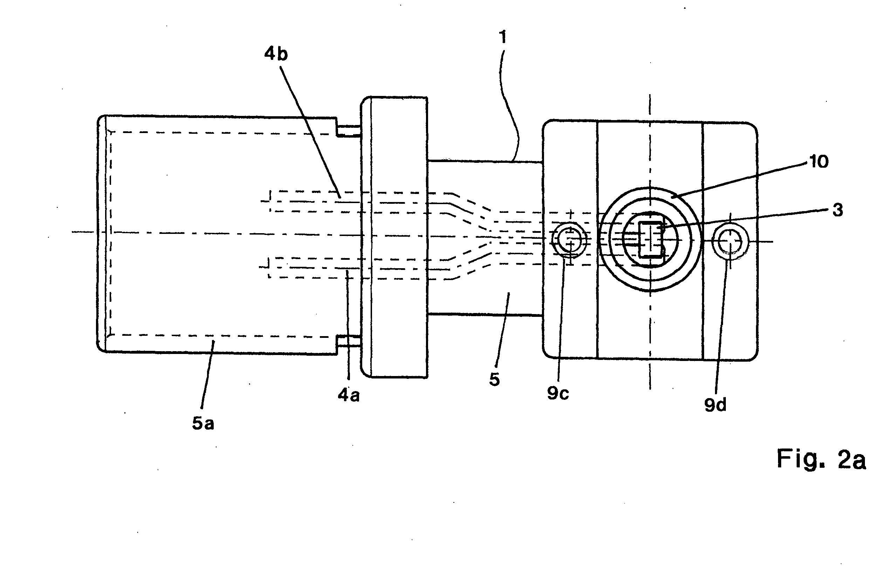

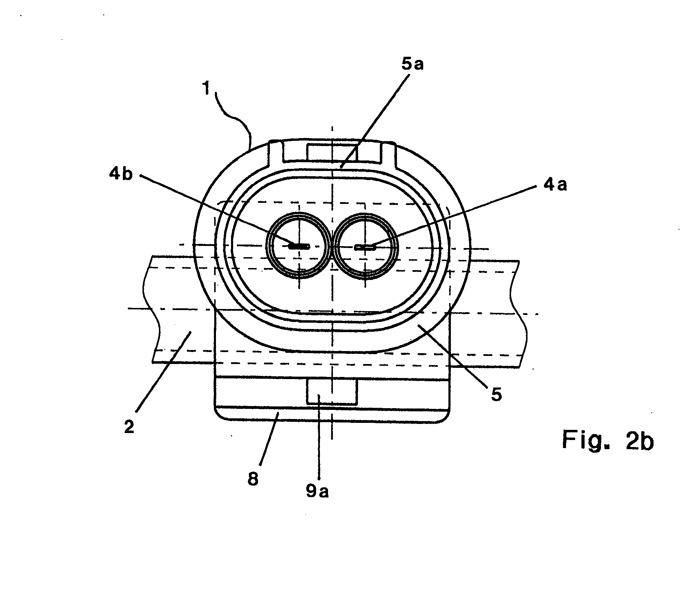

Figur 2 zeigt eine weitere erfindungsgemäße Vorrichtung zur Bestimmung der Temperatur eines strömenden Mediums in einer Rohr- oder Schlauchleitung bzw. einem Rohr- oder Schlauchleitungsabschnitt 2 im Längsschnitt, bei deren Herstellung die Metallstreifen 4a, 4b nicht gebogen werden. Dabei ist ein Sensorelement 3 vorhanden, das aus einem keramischen Substrat und einem darauf angeordneten Platin-Dünnfilmwiderstand gebildet ist. Das Sensorelement 3 ist elektrisch und mechanisch mit den Metallstreifen 4a, 4b ( siehe Fig. 2a ) verbunden, wobei das Sensorelement 3 die beiden Metallstreifen 4a, 4b an ihrem einen Ende brückenartig überspannt. Die Metallstreifen 4a, 4b sind in einem Bereich zwischen ihren Enden in ein Kunststoffgehäuse 5 eingebettet, wobei das Kunststoffgehäuse 5 durch Umspritzen der Metallstreifen 4a, 4b gebildet ist und somit eine mechanisch feste Verbindung zwischen Kunststoffgehäuse 5 und Metallstreifen 4a, 4b ausgebildet ist. Das Kunststoffgehäuse 5 ist im Bereich der Enden der Metallstreifen 4a, 4b, welche dem Sensorelement 3 abgewandt sind, in Form eines Steckers 5a gestaltet, der einen unkomplizierten Anschluss eines hier nicht dargestellten elektrischen Anschlusskabels ermöglicht. Das Sensorelement 3 befindet sich in einer Öffnung 6 im Kunststoffgehäuse 5 in unmittelbarer Nähe zum zu messenden Rohr- oder Schlauchleitungsabschnitt 2. Dabei sind das Sensorelement 3 und der Rohr- oder Schlauchleitungsabschnitt 2 mittels einer wärmeleitfähigen Masse 7 miteinander verbunden. Ein Deckel 8 verschließt die Öffnung 6 und ist mit Befestigungsschrauben 9a, 9b von unten am Kunststoffgehäuse 5 befestigt. Dabei fixiert der Deckel 8 den Rohr- oder Schlauchleitungsabschnitt 2 in der Vorrichtung 1, indem er ihn gegen einen O-Ring 10 drückt. Der O-Ring 10 dichtet dabei den Raum um das Sensorelement 3 ab.

Figur 2a zeigt die Vorrichtung 1 aus Figur 2 ohne Deckel 8, Befestigungsschrauben 9a, 9b, wärmeleitfähige Masse 7 sowie ohne Rohr- oder Schlauchleitungsabschnitt 2 von unten gesehen. Dabei sind die Befestigungslöcher 9c, 9d für die Befestigungsschrauben 9a, 9b zu erkennen.

Figur 2b zeigt die Vorrichtung 1 aus Figur 2 von Seiten des Steckers 5a aus gesehen.

## Patentansprüche

1. Vorrichtung zur Bestimmung der Temperatur eines strömenden Mediums in einer Rohroder Schlauchleitung, wobei die Vorrichtung ein Sensorelement aufweist, das aus einem keramischen Substrat und einem darauf angeordneten Dünnfilmwiderstand gebildet ist, wobei das Sensorelement mit mindestens zwei elektrischen Leitern elektrisch und mechanisch verbunden ist, wobei das Sensorelement in einem Kunststoffgehäuse angeordnet ist, das eine Öffnung mindestens für die Rohr- oder Schlauchleitung aufweist, **dadurch gekennzeichnet, dass** das Kunststoffgehäuse (5) als Spritzgussteil ausgebildet ist und dass die elektrischen Leiter aus Metallstreifen (4a, 4b) gebildet sind, die jeweils ein erstes und ein zweites Ende aufweisen, wobei das Sensorelement (3) an dem ersten Ende der Metallstreifen (4a, 4b) angeordnet ist, und wobei die Metallstreifen (4a, 4b) in einem Bereich zwischen ihrem ersten und zweiten Ende mit dem Kunststoffgehäuse (5) umspritzt sind.

2. Vorrichtung nach Anspruch 1, **dadurch gekennzeichnet, dass** ein Rohr- oder Schlauchleitungsabschnitt (2) zum Einbau in die Rohr- oder Schlauchleitung sowie das Sensorelement (3) in der Öffnung (6) angeordnet sind, wobei das Sensorelement (3) und der Rohr- oder Schlauchleitungsabschnitt (2) über eine wärmeleitfähige Masse (7) miteinander verbunden sind.

3. Vorrichtung nach Anspruch 2, **dadurch gekennzeichnet, dass** der Rohr- oder Schlauchleitungsabschnitt (2) in mindestens einem Bereich seines Außendurchmessers mit dem Kunststoffgehäuse (5) umspritzt ist.

4. Vorrichtung nach einem der Ansprüche 1 bis 3, **dadurch gekennzeichnet, dass** das Kunststoffgehäuse (5) im Bereich des zweiten Endes der Metallstreifen (4a, 4b) als Stecker (5a) zur Verbindung der Metallstreifen (4a, 4b) mit einem elektrischen Anschlusskabel ausgebildet ist.

5. Vorrichtung nach einem der Ansprüche 1 bis 4, **dadurch gekennzeichnet, dass** die Öffnung (6) mit einem Deckel (8) verschlossen ist.

6. Verfahren zur Herstellung einer Vorrichtung nach einem der Ansprüche 2 bis 3, **dadurch gekennzeichnet, dass** die Metallstreifen (4a, 4b) in dem Bereich zwischen ihrem ersten und zweiten Ende ein erstes Mal gebogen werden, dass die Metallstreifen (4a, 4b) dann in dem Bereich zwischen ihrem ersten und zweiten Ende sowie der Rohr- oder Schlauchleitungsabschnitt (2) in mindestens einem Bereich seines Außendurchmessers mit dem Kunststoffgehäuse (5) umspritzt werden, dass das erste Ende der Metallstreifen (4a, 4b) nun derart ein zweites Mal gebogen wird, dass das erste Ende nahe dem Rohr- oder Schlauchleitungsabschnitt (2) platziert wird, und dass dann eine Menge an wärmeleitfähiger Masse (7) in die Öffnung (6) gegeben wird, so dass der Rohr- oder Schlauchleitungsabschnitt (2) und das Sensorelement (3) mittels der wärmeleitfähigen Masse (7) miteinander verbunden werden.

7. Verfahren zur Herstellung einer Vorrichtung nach Anspruch 2, **dadurch gekennzeichnet, dass** die Metallstreifen (4a, 4b) in dem Bereich zwischen ihrem ersten und zweiten Ende ein erstes Mal gebogen werden, dass die Metallstreifen (4a, 4b) dann in dem Bereich zwischen ihrem ersten und zweiten Ende mit dem Kunststoffgehäuse (5) umspritzt werden, dass nun der Rohr- oder Schlauchleitungsabschnitt (2) in die Öffnung (6) eingelegt wird, dass das erste Ende der Metallstreifen (4a, 4b) nun derart ein zweites Mal gebogen wird, dass erste Ende nahe dem Rohr- oder Schlauchleitungsabschnitt (2) platziert wird, und dass dann eine Menge an wärmeleitfähiger Masse (7) in die Öffnung (6) gegeben wird, so dass der Rohroder Schlauchleitungsabschnitt (2) und das Sensorelement (3) mittels der wärmeleitfähigen Masse (7) miteinander verbunden werden.

8. Verfahren nach Anspruch 6 oder 7, **dadurch gekennzeichnet, dass** die Montage des Sensorelements (3) vor dem ersten Biegen der Metallstreifen (4a, 4b) erfolgt.

9. Verfahren nach Anspruch 6 oder 7, **dadurch gekennzeichnet, dass** die Montage des Sensorelements (3) nach dem zweiten Biegen der Metallstreifen (4a, 4b) erfolgt.

10. Verfahren nach einem der Ansprüche 6 bis 9, **dadurch gekennzeichnet, dass** das erste Ende der Metallstreifen (4a, 4b) beim ersten Mal um +90° gebogen wird und dass das erste Ende der Metallstreifen (4a, 4b) beim zweiten Mal um -90° in den Ausgangszustand zurückgebogen wird.
